# EUROPÄISCHE PATENTSCHRIFT

(11) **EP 3 030 375 B1**
(45) Veröffentlichungstag und Bekanntmachung des Hinweises auf die Patenterteilung: **03.03.2021**
(21) Anmeldenummer: 14734037.6
(22) Anmeldetag: 17.06.2014
(51) Int. Cl.: B23K 26/04, B23K 26/06, B23K 26/08

(54) **VORRICHTUNG ZUR MATERIALBEARBEITUNG MIT EINEM LASERSTRAHL**
DEVICE FOR MACHINING MATERIAL BY MEANS OF A LASER BEAM
DISPOSITIF D'USINAGE DE MATIÈRE PAR FAISCEAU LASER

(30) Priorität: 06.08.2013 DE 102013215442
(43) Veröffentlichungstag der Anmeldung: 15.06.2016
(73) Patentinhaber: Robert Bosch GmbH, 70442 Stuttgart (DE)
(72) Erfinder: ENGELMAYER, Andreas, 70199 Stuttgart (DE)
(86) Internationale Anmeldenummer: PCT/EP2014/062679
(87) Internationale Veröffentlichungsnummer: WO 2015/018552

(56) Entgegenhaltungen:
- EP-A1- 1 716 963
- EP-A2- 1 547 719
- WO-A2-2008/009806
- US-A1- 2002 057 481
- US-A1- 2004 241 922

## Beschreibung

Die Erfindung betrifft eine Vorrichtung zur Führung eines Laserstrahls zur Bearbeitung eines Werkstücks, wobei der Laserstrahl über eine Spiegelanordnung und eine fokussierende optische Anordnung auf durch geeignete Ausrichtung der Spiegelanordnung vorwählbare Bearbeitungspunkte auf dem Werkstück gelenkt ist.

Aus der US 2004/0241922 A1 ist eine Vorrichtung zum Aufheizen einer Schicht auf einem Substrat mittels eines Laserstrahls bekannt. Die Vorrichtung weist eine Laserquelle und eine optische Einheit auf, die den Laserstrahl entlang des Laserstrahls formt und auf das Substrat lenkt. Die optische Einheit weist dabei eine Spiegelanordnung und abbildende optische Anordnungen mit polarisierenden Elementen auf, wobei der Strahl wiederholt über einen optischen Weg durch die Schicht geführt wird.

Aus der EP 1 716 963 A1 ist eine optische Anordnung für die Remote-Laser-Materialbearbeitung zur Erzeugung eines dreidimensionalen Arbeitsraumes bekannt. Erfindungsgemäß besteht die Vorrichtung aus einem Kollimator mit der Brennweite f_{K}, welcher den aus einer Lichtleitfaser austretenden Laserstrahl kollimiert, einem Ablenksystem mit mindestens einem drehbar gelagerten Spiegel sowie einem Antrieb für die Winkelverstellung des Spiegels, und einem Fokussierobjektiv mit der Brennweite f_{O}, welches den kollimierten und vom Spiegelsystem abgelenkten Laserstrahl fokussiert. Dabei ist vorgesehen, dass der Kollimator mittels einer Linearführung entlang der Strahlachse derart beweglich gelagert ist, dass die Position des Laserfokus nicht mehr auf eine Ebene beschränkt ist, sondern zur Beschreibung einer Bahnkurve im Raum geeignet ist, sowie dass der mittlere Abstand zwischen Kollimator und dem Fokussierobjektiv so gewählt ist, dass bei einer Verstellung des Kollimators zur Fokusverschiebung in z-Richtung (Strahlachse) der Abbildungsmaßstab konstant bleibt.

Laserstrahlung zur Bearbeitung von Materialien wird beispielhaft zur Markierung, zum Bohren von Leiterplatten, zum Schweißen von Kunststoffteilen oder auch zum Sintern eingesetzt. Bei der Bearbeitung von Materialien mittels der Laserstrahlung kann die Strahlung mittels eines so genannten Scanners mit zwei im wesentlichen orthogonal zueinander angeordneten drehbaren Scanner-Spiegeln auf wählbare Positionen auf einem Werkstück gelenkt werden. Die Lenkung erfolgt so, dass ein wählbares ScanFeld auf dem Werkstück in zwei oder drei Dimensionen erreicht werden kann, wobei das Scanfeld meist zweidimensional ist, aber auch eine Erweiterung in drei Dimensionen möglich ist. Die Fokussierung der Laserstrahlung kann mit einem Flachfeldobjektiv erfolgen, welches die Laserstrahlung in einer Ebene auf dem Objekt fokussiert. Der Ort des Fokus hängt dabei unter anderem vom Einfallswinkel der Laserstrahlung in das Flachfeldobjektiv ab. Da die Auslenkung des Laserstrahls auf dem Objekt typischerweise annähernd proportional zum Auftreffwinkel der Strahlung in das Objektiv ist, werden die Scanner-Spiegel meist möglichst nahe am Objektiv angeordnet um ein möglichst großes Bearbeitungsfeld vor Vignettierung der Strahlung durch das Objektiv zu erhalten. Der Auftreffwinkel der Laserstrahlung ist bei einem ebenen Werkstück unerheblich, kann jedoch bei einem dreidimensional geformten Werkstück durchaus für die Bearbeitung Bedeutung haben. Der Auftreffwinkel der Laserstrahlung auf die Brennebene ist bei einem ebenen Werkstück somit auf der optischen Achse der Anordnung senkrecht, ist außerhalb der optischen Achse von dieser weggeneigt und nimmt zum Rand des Bearbeitungsfeldes hin zu.

Alternativ kann die Fokussierung der Laserstrahlung auf dem Werkstück auch mit einem telezentrischen Objektiv erfolgen, bei dem die auftreffende Strahlung im gesamten Bearbeitungsfeld im Wesentlichen senkrecht auf das Werkstück auftrifft. Diese telezentrischen Objektive sind jedoch mit höheren Anschaffungskosten verbunden und bewirken immer noch eine gewisse Abschattung, so dass sie die Aufgabe der Erfindung nicht zufriedenstellend lösen. Spezielle Objektive für Machine-Vision weisen einen Strahlengang mit auf der Objektseite nach innen zur optischen Achse geneigten Strahlen auf. Diese Objektive sind für einen Einsatz mit Laserstrahlung hoher Leistungsdichte nicht geeignet, da sie nicht die dafür notwendige Beschichtung der Linsen aufweisen.

Nachteilig an den derzeit zur Strahlführung genutzten Anordnungen ist, dass bei dreidimensionalen Objekten, beispielhaft im Bereich seitlich der optischen Achse, aber auch auf der optischen Achse, ein Teil der Laserstrahlung von dem Objekt abgeschattet werden kann. Dies kann zu einer verminderten Bearbeitungsqualität oder zu Schäden am Werkstück führen, wenn ein erhabener Teil des Werkstücks von Laserstrahlung getroffen wird. Nach dem Stand der Technik wird deswegen die Laserstrahlung über seitlich angebrachte zusätzliche Spiegel auf das Objekt gelenkt. Dies erfordert eine präzise Justage und kann wegen der Verschmutzung der Kassettenspiegel zu Problemen führen.

Werden solche dreidimensionalen Werkstücke ohne die Scan-Funktion bearbeitet, sinkt die Bearbeitungsgeschwindigkeit ab und in ungünstigen Fällen ist eine Bearbeitung nicht möglich. Alternativ kann zur Strahlführung ein Taumelscan-System oder eine Trepannieroptik benutzt werden, bei der über drei Keilplatten ein seitlicher Versatz von senkrecht auf dem Werkstück auftreffender Laserstrahlung erreicht werden kann. Diese opto-mechanischen Systeme sind jedoch aufwändig und daher mit hohen Kosten verbunden.

Es ist daher Aufgabe der Erfindung, eine Vorrichtung bereitzustellen, welche es ermöglicht, auch dreidimensional geformte Objekte mittels Laserstrahlung mit einer verbesserten Qualität, insbesondere ohne eine Beeinträchtigung durch eine SelbstAbschattung, zu bearbeiten.

### Offenbarung der Erfindung

Die Aufgabe der Erfindung wird durch die Merkmale des Anspruchs 1 gelöst.

Als fokussierende optische Anordnung wird in vielen Fällen ein so genanntes F-Theta-Objektiv verwendet, das die eintretende Strahlung in einem Fokuspunkt in einem Abstand zur optischen Achse annähernd proportional zu deren Eintrittswinkel auf einem Werkstück fokussiert. Die Spiegel sind möglichst nahe an der fokussierenden optischen Anordnung positioniert um große Eintrittswinkel - und damit eine große Bearbeitungsfläche - verwirklichen zu können. Die Laserstrahlung trifft abseits der optischen Achse unter einem von der optischen Achse abgewandten Winkel auf und kann daher von Erhebungen auf dem Werkstück abgeschattet werden. Erfindungsgemäß ist dagegen vorgesehen, dass die Laserstrahlung abseits der optischen Achse unter einem der optischen Achse zugewandten Winkel auftrifft. Dies wird erreicht, indem die Scannerspiegel weiter von der fokussierenden optischen Anordnung angeordnet werden als dies nach dem Stand der Technik vorgesehen ist. Derzeit sind die Spiegel innerhalb der einfachen Brennweite der fokussierenden optischen Anordnung angebracht, so dass die gewünschte große Bearbeitungszone erzielt werden kann. Hierdurch ist der Lichtweg von der optischen Achse weggeneigt, wobei der Winkel mit zunehmender Entfernung von der optischen Achse zunimmt. Würden die Spiegel im Fokus der optischen Anordnung positioniert, wären die austretenden Strahlen im Wesentlichen parallel zur optischen Achse orientiert. Durch die erfindungsgemäße Anordnung jenseits der Fokusentfernung sind die austretenden Strahlen wunschgemäß zur optischen Achse hin geneigt und es können Positionen auf dem Werkstück ohne eine Selbstabschattung durch eine Erhebung in der Mitte des Werkstücks bearbeitet werden. Dabei ist es auch mit einfachen Objektiven möglich, die Anforderungen zu erfüllen, wie beispielhaft beim Schweißen von Kunststoff-Bauteilen, bei dem häufig ein Fokusdurchmesser von 1 Millimeter oder größer ausreicht. Mit der Anordnung ist es beispielhaft möglich, zwei ineinander gesteckte Rohre miteinander zu verschweißen. Dies ist mit konventionellen Anordnungen nur unter Begehung von Umwegen möglich.

Weist die Spiegelanordnung zwei bewegliche Spiegel mit je einer Drehachse auf, können die Spiegel mit einem galvanometrischen Antrieb besonders schnell bewegt werden und so der Laserstrahl auf die Bearbeitungspunkte auf dem Werkstück positioniert und geführt werden. Es sind somit eine kurze Bearbeitungsdauer, hohe Bearbeitungsbeziehungsweise Verfahrgeschwindigkeiten (beispielhaft für Quasisimultan-Schweißen) und ein hoher Durchsatz an Werkstücken erreichbar.

In einer bevorzugten Ausführung ist die fokussierende optische Anordnung als Flachfeldobjektiv ausgebildet. Wird ein Flachfeldobjektiv, welches ein F-Theta-Objektiv sein kann, eingesetzt, kann auf einem Werkstück die Laserstrahlung auf einer planen Bearbeitungsebene auch ein geringer Fokusdurchmesser beziehungsweise eine bessere Abbildungsqualität erreicht werden. Wird eine einfachere fokussierende Optik eingesetzt, fokussiert diese das Laserlicht beispielhaft auf einer Kugelschale, so dass im Bereich abseits der optischen Achse ein größerer Fokuspunkt erzeugt wird oder Werkstück oder Optik entsprechend nachgeführt werden müssen.

In einer weiteren bevorzugten Ausführung ist die Spiegelanordnung als zwei im Wesentlichen zueinander orthogonale Ablenkspiegel oder als kardanisch aufgehängter Einzelspiegel ausgeführt. Hierdurch kann ein handelsüblicher Scankopf mit einer hohen Bearbeitungsgeschwindigkeit verwendet werden und trotzdem eine Selbstabschattung durch eine Erhebung auf dem Werkstück verhindert werden.

### Kurze Beschreibung der Zeichnungen

Die Erfindung wird im Folgenden anhand eines in den Figuren dargestellten Ausführungsbeispiels näher erläutert. Es zeigen:
Figur 1 einen Strahlverlauf nach dem Stand der Technik,
Figur 2 einen Strahlverlauf bei der erfindungsgemäßen Anordnung,
Figur 3 einen Strahlverlauf bei einer Bearbeitung zweier Rohre.

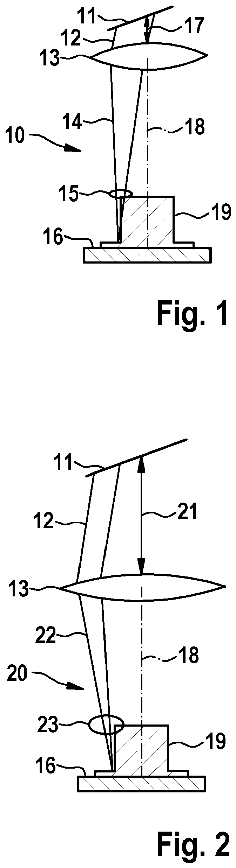

Figur 1 zeigt eine erste Scanneranordnung 10 nach dem Stand der Technik zur Bearbeitung eines Werkstück-Oberteils 19 und eines Werkstück-Unterteils 16, mittels Laserstrahlung. Das Werkstück-Oberteil 19 weist in dem Beispiel eine dem Werkstück-Unterteil 16 zugewandte Basisplatte auf, die mit dem Werkstück-Unterteil 16 verschweißt wird. Licht einer Laserquelle wird in der Scanneranordnung 10 mittels zumindest eines Ablenkspiegels 11 als einfallender Strahl 12 einer Fokussierlinse 13 zugeführt, die das Laserlicht als ersten austretenden Strahl 14 auf der Basisplatte des Werkstück-Oberteils 19 fokussiert. Zur Ablenkung werden allgemein zwei näherungsweise zueinander (nicht ganz) orthogonale Ablenkspiegel eingesetzt, von denen hier ein Ablenkspiegel 11 gezeigt ist. Alternativ kann beispielhaft auch ein einzelner kardanisch aufgehängter Ablenkspiegel 11, oder eine Piezo-Anordnung um die zwei nichtparallelen Drehachsen zu bewegen, verwendet werden. Der Ablenkspiegel 11 ist in einem ersten Spiegelabstand 17 von der Fokussierlinse 13 angeordnet, so dass er innerhalb der einfachen Brennweite der Fokussierlinse 13 liegt. Der erste austretende Strahl 14 ist von einer optischen Achse 18 weggeneigt, wobei der Neigungswinkel mit dem Abstand des Auftreffpunktes auf dem Werkstück-Oberteil 19 von der optischen Achse zunimmt. In dem hier dargestellten Ausführungsbeispiel weist das Werkstück-Oberteil 19 im mittleren Bereich eine Werkstück-Erhebung auf. Durch die Anordnung trifft der erste austretende Strahl 14 die Werkstück-Erhebung in einem Selbstabschattungs-Bereich 15. Hierdurch kann das Werkstück-Oberteil 19 in dem Selbstabschattungs-Bereich 15 beschädigt werden und/oder die Strahlqualität oder Strahlintensität im Bearbeitungspunkt auf dem Werkstück-Oberteil 19 unzureichend sein.

Figur 2 zeigt eine zweite Scananordnung 20 mit der erfindungsgemäß verbesserten Anordnung. Gleiche Bauteile wie in Figur 1 sind mit gleichen Bezugszeichen versehen. Der Ablenkspiegel 11 ist in einem gegenüber dem ersten Spiegelabstand 17 vergrößerten zweiten Spiegelabstand 21 angeordnet. Der einfallende Strahl 12 trifft weiter von der optischen Achse 18 entfernt auf die Fokussierlinse 13 als in der ersten Scanneranordnung 10. Wenn die Brennweite der Fokussierlinse 13 identisch zur Anordnung aus Figur 1 ist und wenn in erster Näherung die Fokussierlinse 13 sich wie ein F-Theta-Objektiv verhält, trifft der Laserstrahl als zweiter austretender Strahl 22 nach innen zur optischen Achse 18 gekippt auf die selbe Stelle am Werkstück wie in Figur 1. Der zweite austretende Strahl 22 passiert die Werkstück-Erhebung auf dem Werkstück-Oberteil 19 in einem freien Strahlbereich 23 und wird mit der für die Bearbeitung erforderlichen Strahlqualität auf das Werkstück-Oberteil 19 fokussiert. Je nach einem verfügbaren Abstand zwischen der Fokussierlinse 13 und dem Werkstück-Oberteil 19 kann eine möglichst kleine Brennweite der Fokussierlinse 13 verwendet werden um einen möglichst stark zur optischen Achse geneigten Auftreffwinkel zu erreichen. Auch eine Verkleinerung des Strahldurchmessers kann im Rahmen einer Optimierung sinnvoll sein. Als Fokussierlinse 13 kann ein handelsübliches Flachfeldobjektiv, beispielsweise ein so genanntes F-Theta-Objektiv, verwendet werden.

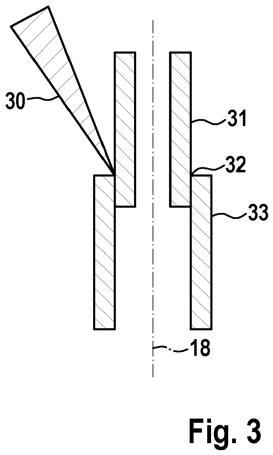

Figur 3 zeigt ein Beispiel zur Verwendung der erfindungsgemäßen Vorrichtung zur Materialbearbeitung mit einem Laserstrahl. Ein erstes Rohrstück 31 ist in ein zweites Rohrstück 33 eingebracht und beide Rohrstücke 31, 33 sollen an einer umlaufenden Schweißnaht 32 miteinander verbunden werden. Hierzu trifft Laserstrahlung 30 unter einem zur optischen Achse 18 hin geneigten Winkel auf die Schweißnaht 32 auf. Durch die Neigung der Laserstrahlung 30 zur optischen Achse 18 hin wird eine Abschattung der Laserstrahlung 30 durch das erste Rohrstück 31 vermieden.

## Patentansprüche

1. Vorrichtung zur Führung eines Laserstrahls zur Bearbeitung eines Werkstücks (16, 19), wobei der Laserstrahl über eine Spiegelanordnung (11) und eine fokussierende optische Anordnung (13), die eine optische Achse (18) aufweist, auf durch geeignete Ausrichtung der Spiegelanordnung (11) vorwählbare Bearbeitungspunkte auf dem Werkstück (16, 19) gelenkt ist, wobei der Laserstrahl als einfallender Strahl (12) einer fokussierenden optischen Anordnung (13) und als austretender Strahl (22) der fokussierenden optischen Anordnung (13) auf dem Werkstück (16, 19) fokussiert wird, wobei die Spiegelanordnung (13) weiter als die einfache Brennweite von der optischen Hauptebene der optischen Anordnung (13) entfernt angeordnet ist, dadurc
h gekennzeichnet, dass
die optische Anordnung (13) als ein Flachfeldobjektiv ausgebildet ist, und dass der einfallende Strahl (12) von der optischen Achse (18) entfernt auf die fokussierende optische Anordnung (13) trifft und der vollständige austretende Strahl (22) zur Vermeidung einer Selbstabschattung durch eine Werkstückerhebung nach innen zur optischen Achse (18) gekippt ist und dabei abseits zur optischen Achse (18) und ausschließlich in einen freien Strahlbereich (23) außerhalb eines Selbstabschattungsbereichs auf den gewählten Bearbeitungspunkt auf dem Werkstück (16, 19) trifft.

2. Vorrichtung nach Anspruch 1, **dadurch gekennzeichnet, dass** die Spiegelanordnung (11) zwei bewegliche Ablenkspiegel mit je einer Drehachse aufweist.

3. Vorrichtung nach einem der vorliegenden Ansprüche, **dadurch gekennzeichnet, dass** die fokussierende optische Anordnung (13) eine Fokusierlinse aufweist, die sich wie ein F-Theta-Objektiv verhält.

4. Vorrichtung nach einem der vorherigen Ansprüche, **dadurch gekennzeichnet, dass** die Spiegelanordnung als zwei näherungsweise zueinander orthogonale Ablenkspiegel (11) oder als kardanisch aufgehängter Einzelspiegel ausgeführt ist.

## Claims

1. Apparatus for guiding a laser beam for machining a workpiece (16, 19), wherein the laser beam is directed, via a mirror arrangement (11) and a focusing optical arrangement (13) having an optical axis (18), at machining points on the workpiece (16, 19) that are preselectable by way of a corresponding alignment of the mirror arrangement (11), wherein the laser beam as an incident beam (12) of a focusing optical arrangement (13) and as an emerging beam (22) of the focusing optical arrangement (13) is focused on the workpiece (16, 19), wherein the mirror arrangement (13) is arranged at a greater distance from the optical main plane of the optical arrangement (13) than one times the focal length, **characterized in that** the optical arrangement (13) is embodied as a flat field objective lens and **in that** the incident beam (12) is incident on the focusing optical arrangement (13) at a distance from the optical axis (18) and the entire emerging beam (22) is tilted inwardly towards the optical axis (18) to avoid self-shadowing by a workpiece protrusion and is therefore incident on the workpiece (16, 19) on the selected machining point away from the optical axis (18) and only in a free beam region (23) outside a self-shadowing region.

2. Apparatus according to Claim 1, **characterized in that** the mirror arrangement (11) has two movable deflection mirrors each having an axis of rotation.

3. Apparatus according to either of the previous claims, **characterized in that** the focusing optical arrangement (13) has a focusing lens element that behaves like an F-theta objective lens.

4. Apparatus according to one of the preceding claims, **characterized in that** the mirror arrangement is embodied in the form of two deflection mirrors (11) that are approximately orthogonal to each other or as a gimballed individual mirror.

## Revendications

1. Dispositif de guidage d'un faisceau laser pour l'usinage d'une pièce (16, 19), le faisceau laser étant dirigé par le biais d'un agencement de miroirs (11) et d'un agencement optique de focalisation (13) qui présente un axe optique (18), sur des points à usiner sur la pièce (16, 19) pouvant être présélectionnés par une orientation appropriée de l'agencement de miroirs (11), le faisceau laser étant focalisé sur la pièce (16, 19) sous forme de faisceau incident (12) d'un agencement optique de focalisation (13) et sous forme de faisceau sortant (22) de l'agencement optique de focalisation (13), l'agencement de miroirs (13) étant disposé plus loin que la simple distance focale du plan optique principal de l'agencement optique (13), **caractérisé en ce que**
l'agencement optique (13) est réalisé sous forme d'objectif à plan horizontal et **en ce que** le faisceau incident (12) tombe sur l'agencement optique de focalisation (13) à distance de l'axe optique (18) et le faisceau sortant entier (22) est basculé vers l'intérieur vers l'axe optique (18), pour éviter qu'un rehaussement de la pièce ne provoque un ombrage sur celle-ci, et en l'occurrence tombe de manière espacée par rapport à l'axe optique (18) et exclusivement dans une zone libre du faisceau (23) à l'extérieur d'une zone d'ombrage propre sur le point d'usinage sélectionné sur la pièce (16, 19).

2. Dispositif selon la revendication 1, **caractérisé en ce que** l'agencement de miroirs (11) présente deux miroirs de déviation mobiles ayant chacun un axe de rotation.

3. Dispositif selon l'une quelconque des revendications précédentes, **caractérisé en ce que** l'agencement optique de focalisation (13) présente une lentille de focalisation qui se comporte comme un objectif F-thêta.

4. Dispositif selon l'une quelconque des revendications précédentes, **caractérisé en ce que** l'agencement de miroirs est réalisé sous la forme de deux miroirs de déviation (11) approximativement perpendiculaires l'un à l'autre, ou sous la forme de miroirs individuels suspendus à la cardan.
